# EUROPEAN PATENT APPLICATION

(11) **EP 2 910 616 A1**
(43) Date of publication of application: **26.08.2015**
(21) Application number: 13849746.6
(22) Date of filing: 09.10.2013
(51) Int. Cl.: C09J 7/00, B32B 27/00, C09J 4/02, C09J 11/04, C09J 133/02, G02F 1/1333, G09F 9/00

(54) **TRANSPARENT DOUBLE-SIDED ADHESIVE SHEET AND IMAGE DISPLAY DEVICE USING SAME**

(30) Priority: 22.10.2012 JP 2012233036
(71) Applicant: Mitsubishi Plastics, Inc., Tokyo 100-8252 (JP)
(72) Inventor: NIIMI, Kahoru, Nagahama-shi Shiga 526-8660 (JP); INENAGA, Makoto, Nagahama-shi Shiga 526-8660 (JP)
(74) Representative: Hoffmann Eitle
(86) International application number: PCT/JP2013/077528
(87) International publication number: WO 2014/065126

(57) **Abstract**

Provided is a novel transparent double-sided adhesive sheet which has corrosion resistance reliability that an adherend can be prevented from corrosion degradation, is also furnished with antifoaming reliability that foaming at a sticking interface does not occur, and also has an optical reliability that an increase in haze is little even in a hygrothermal environment. Proposed is a transparent double-sided adhesive sheet which is firstly characterized to have an adhesive layer containing a (meth)acrylate ester copolymer containing a carboxyl group-containing monomer as a copolymerization component at less than 2% by mass and silica fine particles having an average particle size of from 4 to 500 nm or less, and secondly characterized in that the adhesive layer is curable by heat or ultraviolet light.

## Description

### TECHNICAL FIELD

The present invention relates to a transparent double-sided adhesive sheet which can be suitably used to bond the components of an image display device such as a personal computer, a mobile terminal (PDA), a game machine, television (TV), a car navigation system, a touch panel, and a pen tablet, and an image display device using the same.

### BACKGROUND ART

In recent years, in order to improve the visibility of the image display device, the gap between an image display panel such as a liquid crystal display (LCD), a plasma display panel (PDP), or an organic electroluminescence display (organic EL display) and a member to be disposed on the front side (viewing side) thereof is filled with an adhesive sheet or an adhesive agent so as to suppress the irregular reflection of the incident light or the light emitted from the display image at the air layer interface.

For example, in the touch panel display, a configuration is currently dominant in which a touch panel functional layer is interposed between the surface protective panel and the liquid crystal module having an image display panel, and the surface protective panel and the touch panel functional layer and the liquid crystal module and the touch panel functional layer are integrated by sticking with an adhesive sheet or an adhesive resin in order to secure the visibility and to prevent to be damaged when laminating these components.

Plastics have replaced glass as the material of the image display component such as a touch panel member or the surface protective panel as the image display device is required to be light and thin. The dimension of the resin member is easily changed by the environmental change such as a temperature and a humidity as compared to glass and also the resin member exhibits high moisture permeability although the effect of weight saving and thinning is obtained by changing the material of the components to the plastic plate or film, and thus there is a problem of an increased risk that hygroscopic whitening of the adhesive sheet via the member occurs when the members are integrated using an adhesive sheet or foaming or peeling is caused by the dimensional changes of the members.

The adhesive sheet is required to exhibit higher adhesion reliability in order to solve such a problem, and thus a highly polar component such as a carboxylic acid group is generally introduced as a copolymerization component or additive of the adhesive composition in order to impart the basic physical properties as the adhesive member.

However, such a highly polar component exhibits an oxidative effect, and thus the adhesive sheet causes the oxidative degradation of adherend or the like in an environment such as a high temperature and high humidity or by a long-term storage in some cases. It is required to pay attention to such oxidative degradation of adherend particularly in the case of bonding components having a component composed of a metal member, such as an ITO film or an IGZO film like a touch panel functional layer, or a copper wiring.

Hence, in view of such a problem, a proposal is made in which the oxidative degradation of adherend is suppressed by not introducing the acidic component such as a carboxyl group into the adhesive composition.

For example, an adhesive composition has been proposed which contains an acrylic polymer which consists of an alkoxyalkyl acrylate (component A) and an acrylic monomer (component B) having a hydroxyl group as the essential monomer components and has a mass average molecular weight of from 400,000 to 1,600,000 (see Patent Document 1).

In addition, an adhesive material composition or the like has also been proposed which contains a resin composition consisting of a copolymer composed of (A) a (meth)acrylic acid alkyl ester, (B) a functional group-containing unsaturated monomer, and (C) an ethylenically unsaturated monomer component having a heterocyclic structure which is unopened and contains two or more nitrogen atoms as a main component and a crosslinking agent (see Patent Document 2).

In addition, an adhesive sheet has also been proposed which consists of an adhesive composition obtained by formulating an acrylic polymer containing a carboxyl group with a specific amine compound exhibiting polarity (see Patent Document 3).

On the other hand, an acrylic transparent adhesive film characterized in that its surface contains ultrafine particles having a hydroxyl group has been proposed as an adhesive film which can be prevented from whitening even being kept in a high temperature and high humidity environment or under the condition of being immersed in warm water, boiled or the like for a long period of time (see Patent Document 4).

### CITATION LIST

### PATENT DOCUMENT

Patent Document 1: JP 2010-215923 A
Patent Document 2: JP 2007-246882 A
Patent Document 3: JP 2011-120135 A
Patent Document 4: JP 2002-348546 A

### SUMMARY OF THE INVENTION

### PROBLEM TO BE SOLVED BY THE INVENTION

As described in Patent Document 1, although the effect of corrosion resistance can be expected in the introduction of a hydroxyl group as the alternative to a highly polar component, antifoaming properties are inferior to the products of related art, which is not necessarily satisfactory.

In addition, as described in Patent Document 2, the use of nitrogen-containing compound (C) contributes to the adhesive properties, but the stability to heat or ultraviolet light is inferior and it is difficult to obtain optical reliability such as hygrothermal whitening or yellowing, and thus it can be said that the composition is unsuitable for optical applications such as an image display device.

Furthermore, as described in Patent Document 3, in the case of using an amine compound, there is an effect of suppressing the corrosion degradation of adherend since the amine compound stabilizes the acidic component in the adhesive composition, but the oxidizing component is captured by the coordinate bond of a reversible reaction, and thus it is hard to say that sufficient reliability is obtained in a harsh environmental test or the like.

As described above, any of the adhesive sheets that have been disclosed in the related art does not satisfy the function of corrosion protection property for the adherend and antifoaming reliability that foaming at the sticking interface does not occur.

Accordingly, the invention is intended to provide a novel transparent double-sided adhesive sheet which has corrosion resistance reliability that the adherend can be prevented from corrosion degradation, is also furnished with antifoaming reliability that foaming at the sticking interface does not occur, and further has an optical reliability that an increase in haze is little even in a hygrothermal environment.

### MEANS FOR SOLVING PROBLEM

It is effective to use an adhesive containing an acidic component such as a carboxyl group, particularly acrylic acid as little as possible in order to increase corrosion resistance reliability for the adherend (for example, a touch panel functional layer) having a problem of oxidative degradation, but the cohesive force as an adhesive decreases and antifoaming reliability deteriorates when the amount of such a component is decreased, thus an approach to use another component instead of the highly polar component such as a carboxyl group has been employed so far.

In addition, it has been commonly considered that the use of another highly polar component is essential since the highly polar component such as a carboxyl group makes it possible to obtain not only high cohesive force or high adhesive force by its hydrogen bonding but also an effect of increasing the affinity of adhesive for water and suppressing the cloudiness of adhesive caused by the humidification.

On the other hand, the inventors have found out that the antifoaming properties due to a lack of cohesive force can be overcome when the adhesive sheet is put in a curable state before being stuck to an adherend and is cured after being stuck to the adherend with regard to the antifoaming properties at the sticking interface due to a lack of cohesive force associated with a decrease in the amount of highly polar component, and also the optical reliability can be secured while suppressing a further decrease in cohesive force by the use of silica particles having a specific average particle size with regard to the phenomenon such as cloudiness caused by a decrease in the amount of highly polar component, thereby completing the invention.

In other words, the invention is intended to propose a transparent double-sided adhesive sheet which is firstly characterized to have an adhesive layer containing a (meth)acrylate ester copolymer containing a carboxyl group-containing monomer as a copolymerization component at less than 2% by mass and silica fine particles having an average particle size of from 4 to 500 nm or less, and
secondly characterized in that the adhesive layer is curable by heat or ultraviolet light.

### EFFECT OF THE INVENTION

The transparent double-sided adhesive sheet proposed by the invention has an adhesive layer containing a (meth)acrylate ester copolymer containing a carboxyl group-containing monomer as a copolymerization component at less than 2% by mass and silica fine particles having an average particle size of from 4 to 500 nm or less, and thus it has an advantage that sufficient corrosion resistance reliability is exhibited for an adherend having a problem of oxidative degradation and optical reliability that hygrothermal whitening is not caused even when the amount of carboxyl group-containing monomer used is small.

Moreover, the adhesive layer of the transparent double-sided adhesive sheet proposed by the invention has room to be cured by heat or ultraviolet light, and thus the transparent double-sided adhesive sheet can be used by curing the adhesive layer by heat or ultraviolet light after being bonded to an adherend and excellent antifoaming properties can be exerted by the curing after bonding. In other words, the cohesive force of the adhesive sheet increases by the secondary curing after bonding and thus the anchoring effect on the adhesion interface can be also obtained. Hence, it is possible to bond two adherends more firmly and to exert excellent antifoaming properties.

### BRIEF DESCRIPTION OF DRAWINGS

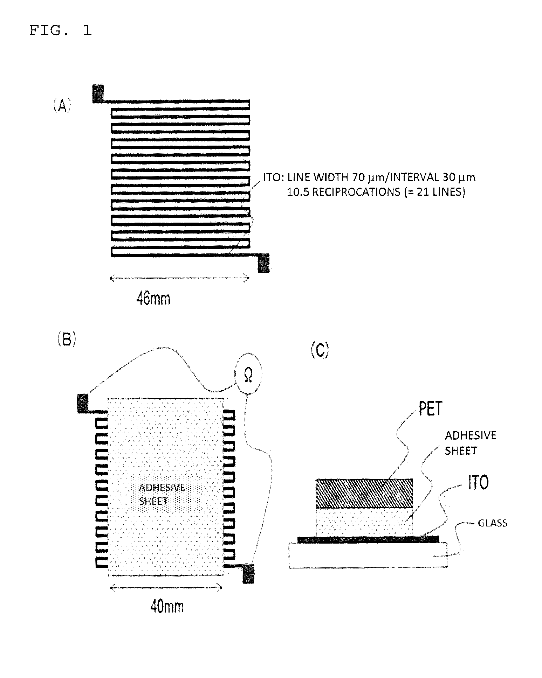

Fig. 1 is a view for describing the evaluation test method of corrosion resistance reliability performed in Examples to be described below, (A) is a top view of the ITO pattern of the ITO glass substrate for corrosion resistance reliability evaluation, (B) is a top view illustrating a state in which the adhesive sheet covers the ITO glass substrate for corrosion resistance reliability evaluation, and (C) is a cross-sectional view of a sample for corrosion resistance reliability evaluation.

### MODE(S) FOR CARRYING OUT THE INVENTION

Hereinafter, embodiments of the invention will be described. However, the scope of the invention is not limited to these embodiments.

### <Transparent double-sided adhesive sheet>

The transparent double-sided adhesive sheet according to the present embodiment (hereinafter, referred to as the "present adhesive sheet") is a double-sided adhesive sheet having an adhesive layer A in a B-stage state curable by heat or ultraviolet light.

Here, the B-stage state means a half cured state of the resin exhibiting adhesiveness or tackiness and means a state in which it is possible to maintain a film shape or a sheet shape in the state, to further cure (crosslink) the resin by heating or irradiating with light, and to be in a highly adhesive state.

As the method to put the adhesive layer A in a B-stage state, it is possible to employ, for example, a method to forcedly stop the curing reaction in the middle, a method to contain two or more kinds of curable resins or crosslinking initiators different in the curing region or the curing reaction therein, or another known method.

### <Adhesive layer A>

The adhesive layer A is an adhesive layer in the B-stage state formed by curing (crosslinking) an adhesive composition containing a (meth)acrylate ester copolymer containing a carboxyl group-containing monomer as a copolymerization component at less than 2% by mass, and preferably containing the (meth)acrylate ester copolymer and a (meth)acrylate ester monomer, and further containing a curable or crosslinkable material, a crosslinking initiator, a reaction catalyst and the like if necessary.

The (meth)acrylate ester copolymer is preferably contained in the adhesive layer A as a main resin component, that is, the base polymer among the resin components constituting the adhesive layer A. The content proportion of the base polymer is not specified but generally occupies 50% by mass or more, particularly 70% by mass or more, and among them, 90% by mass or more (including 100%) of the resin components constituting the adhesive layer A. In addition, the content proportion of each base polymer generally occupies 25% by mass or more, particularly 35% by mass or more, and among them, 45% by mass or more (including 50% by mass), in the case of containing two kinds of base polymers.

### (Base polymer)

The (meth)acrylate ester copolymer as the base polymer of the adhesive layer A preferably contains one kind of the alkyl acrylate or alkyl methacrylate having any one of n-octyl, isooctyl, 2-ethylhexyl, n-butyl, isobutyl, methyl, ethyl, and isopropyl as the alkyl group or two or more kinds selected from these as the (meth) acrylate, namely, an alkyl acrylate or alkyl methacrylate component as the copolymerization component.

Moreover, as other components, the (meth)acrylate ester copolymer may contain an acrylate or methacrylate having an organic functional group such as a carboxyl group, a hydroxyl group, and a glycidyl group as a copolymerization component.

Among them, it is possible to preferably exemplify a copolymer obtained by copolymerizing a combination of one or two or more kinds of alkyl acrylates such as isooctyl acrylate, n-octyl acrylate, n-butyl acrylate, and 2-ethylhexyl acrylate, or a combination of one or two or more kinds of isooctyl acrylate, n-octyl acrylate, n-butyl acrylate, and 2-ethylhexyl acrylate and vinyl acetate.

Among them, a (meth)acrylate ester copolymer containing butyl acrylate and vinyl acetate is particularly preferable as the copolymerization component. Butyl acrylate is not only preferable as a component to impart tackiness to a polymer at room temperature but is also preferable since its Tg is relatively high and thus sagging caused by insufficient cohesive force and excessive flexibility hardly occurs even when acrylic acid or the like is removed as compared with the case of using a flexible monomer other than butyl acrylate. In addition, vinyl acetate is a monomer component of which the homopolymer has a Tg determined by the differential scanning calorimetry (DSC) method of 20°C or higher and thus is preferable in terms that the effect of increasing the apparent cohesive force in a normal temperature region is exhibited.

As the polymerization method using these monomers, it is possible to employ a known polymerization method such as a solution polymerization, an emulsion polymerization, a bulk polymerization, and a suspension polymerization, and it is possible to obtain the acrylate copolymer by the use of a polymerization initiator such as a thermal polymerization initiator or a photopolymerization initiator depending on the polymerization method at this time.

However, it is important for the (meth)acrylate ester copolymer of the adhesive layer A to set the content of the carboxyl group-containing monomer as a copolymerization component to less than 2% by mass.

The adhesive layer exhibits a high degree of corrosion resistance reliability also for the adherend (for example, touch panel functional layer) having a problem of oxidative degradation when the content of the carboxyl group-containing monomer as a copolymerization component is set to less than 2% by mass.

From this point of view, it is important to set the content of the carboxyl group-containing monomer as a copolymerization component to less than 2% by mass, that is, 0% by mass or more and less than 2% by mass in the (meth)acrylate ester copolymer. Among them, it is more preferably 0.05% by mass or more or 1.5% by mass or less and even more preferably 0.1% by mass or more or 1% by mass or less.

The (meth)acrylate ester copolymer preferably contains a monomer component which has a glass transition temperature (Tg) defined by the tan δ peak temperature of dynamic viscoelasticity of -30°C or higher and 10°C or lower and a glass transition temperature (Tg) as a homopolymer determined by the differential scanning calorimetry (DSC) method of 20°C or higher as a copolymerization component. In addition, the mass average molecular weight of the (meth)acrylate ester copolymer is more preferably from 100,000 to 700,000 at this time.

The (meth)acrylate ester copolymer does not contain a carboxyl group-containing monomer such as acrylic acid or contains in a small amount as described above. In general, there is a tendency that the cohesive force deteriorates and the adhesive force decreases when the use amount of such a carboxyl group-containing monomer for copolymerization is decreased. Accordingly, it is possible to increase the cohesive force and to suppress a decrease in adhesive force by adjusting the Tg and molecular weight of the acrylate copolymer and Tg of the monomer component to be in a predetermined range.

In other words, it is possible to exert suitable tackiness as an adhesive sheet when the Tg defined by the tan δ peak temperature of dynamic viscoelasticity of the (meth)acrylate ester copolymer is in the range of from-30°C to 10°C. Hence, from this point of view, the Tg defined by the tan δ peak temperature of dynamic viscoelasticity of the acrylate copolymer is preferably from -30°C to 10°C, more preferably -28°C or higher or 5°C or lower among them, and even more preferably -25°C or higher or 0°C or lower among them.

In addition, it is possible to impart more suitable cohesive force by containing a copolymerization component which has the Tg determined by the differential scanning calorimetry (DSC) method of 20°C or higher. Hence, the Tg determined by the differential scanning calorimetry (DSC) method of at least one copolymerization component is preferably 20°C or higher, 21°C or higher and 200°C or lower among them, and even more preferably 25°C or higher and 150°C or lower among them.

Examples of the copolymerization component having the Tg determined by the differential scanning calorimetry (DSC) method of 20°C or higher may include vinyl acetate, styrene, methyl methacrylate, isobornyl (meth)acrylate, dicyclopentadienyl (meth)acrylate, ethoxylated 4-cumyl phenol (meth)acrylate, 3,3,5-trimethyl cyclohexanol (meth)acrylate, cyclic trimethylolpropane formal (meth)acrylate, 2-hydroxypropyl methacrylate, tert-butyl (meth)acrylate, neopentyl acrylate, cetyl acrylate, phenyl acrylate, toluyl acrylate, 2-phenoxyethyl methacrylate, diethylene glycol methyl ether methacrylate, 2-naphthyl acrylate, 2-methoxycarbonyl phenyl acrylate, ethyl methacrylate, n-butyl methacrylate, sec-butyl methacrylate, isobutyl methacrylate, propyl methacrylate, isopropyl methacrylate, stearyl methacrylate, tetrahydrofurfuryl methacrylate, ethoxylated nonyl phenol methacrylate, cyclohexyl methacrylate, 4-tert-butyl cyclohexyl methacrylate, benzyl methacrylate, phenethyl methacrylate, glycidyl methacrylate, hydroxyethyl methacrylate, acrylamide, hydroxyethyl acrylamide, N,N-dimethylacrylamide, N,N-dimethylaminoethyl acrylamide, and acrylonitrile.

Meanwhile, it is possible to appropriately adjust the glass transition temperature (Tg) defined by the tan δ peak temperature of dynamic viscoelasticity of the acrylate copolymer by the kind and composition ratio of the acrylic monomer or methacrylic monomer used to polymerize this, and further the polymerization conditions.

It is possible to measure the glass transition temperature (Tg) defined by the tan δ peak temperature of dynamic viscoelasticity using a viscoelasticity measuring apparatus, for example, the viscoelasticity measuring apparatus "Dynamic Analyzer RDAII" manufactured by Rheometric Scientific., Inc. At that time, the temperature representing the maximum value of tan δ when measured at a strain of 0.5% and a frequency of 1 Hz using a 25 mm φ parallel plate may be read as the Tg.

On the other hand, the temperature of a sample is raised using a differential scanning calorimeter (for example, Pyris 1 DSC manufactured by PerkinElmer Co., Ltd.) at a temperature rising rate of 10°C/min in a nitrogen atmosphere, and the temperature at which the baseline of the DSC curve thus obtained and the tangent at the inflection point intersect each other may be read as the Tg determined by the differential scanning calorimetry (DSC) method.

It is possible to eliminate the viscous fracture or insufficient tackiness at the time of peeling and to suppress a decrease in adhesive force when the mass average molecular weight of the acrylate copolymer is from 100,000 to 700,000.

Hence, the mass average molecular weight of the acrylate copolymer is preferably from 100,000 to 700,000 from this point of view.

### ((Meth)acrylate monomer)

The (meth)acrylate ester monomer is preferably a crosslinking monomer such as a polyfunctional (meth)acrylate having, for example, two or more (meth)acryloyl groups. The content of the ester monomer is preferably from 0 to 30 parts by mass, particularly 20 parts by mass or less, 10 parts by mass or less among them, particularly 5 parts by mass or less among them with respect to 100 parts by mass of the base polymer.

### (Curing or crosslinking material)

In the adhesive layer A, one or more of an epoxy resin, an acrylic resin, a polydimethyl siloxane resin, or another organic functional polysiloxane resin which can be crosslinked by a free radical polymerization, an atom transfer, radical polymerization, a ring opening polymerization, a ring opening metathesis polymerization, an anionic polymerization, or a cationic polymerization may be formulated as a curing or crosslinking material if necessary.

It is preferable to formulate a heat curing agent such as an organic peroxide, an isocyanate compound, an epoxy compound, or an amine compound in order to perform heat curing.

On the other hand, it is preferable to formulate a cleavage type photoinitiator and a hydrogen abstraction type photoinitiator as the photoinitiator in order to perform photocuring. At this time, either one may be used or both of them may be used concurrently.

Examples of the cleavage type photoinitiator may include benzoin butyl ether, benzyl dimethyl ketal, and 2-hydroxyacetophenone.

On the other hand, examples of the hydrogen abstraction type photoinitiator may include benzophenone, Michler's ketone, 2-ethyl anthraquinone, and thioxanthone and derivatives thereof. However, the photoinitiator is not limited to the substances mentioned above.

In order to put the adhesive layer A in the B-stage state, it is possible to exemplify a method in which the heat curing agent and the photoinitiator are concurrently used to primarily crosslink the adhesive layer to the base polymer by heat curing and to leave the adhesive layer room to be photocured, thereby obtaining the B-stage state.

In addition, it is also possible to obtain the B-stage state by primarily crosslinking the adhesive composition using a photopolymerization initiator which is a component constituting the adhesive layer A by ultraviolet light so as to leave reactivity to ultraviolet light. At this time, the use of the intermolecular hydrogen abstraction type photopolymerization initiator makes it possible that the initiators which have been excited by UV irradiation at the time of primary crosslinking but have not contributed to the crosslinking reaction returns to the ground state and are utilized as the initiator again, and thus it is easy to leave the intermolecular hydrogen abstraction type photopolymerization initiator in the reaction system as the active species even after the primary curing of the composition by ultraviolet light as compared with the intramolecular cleavage type photopolymerization initiator and it can be used as a reaction initiator at the time of further crosslinking (secondary curing). Accordingly, it is preferable to use a hydrogen abstraction type photopolymerization initiator.

It is preferable to adjust the mixing amount of the photopolymerization initiator to be a proportion of from 0.1 to 10 parts by mass, particularly 0.5 part by mass or more or 5 parts by mass or less, and 0.8 part by mass or more or 3 parts by mass or less among them with respect to 100 parts by mass of the base copolymer in consideration of the polymerization reactivity or the adhesive properties and transparency of the resulting adhesive material layer.

### (Other components)

The adhesive layer A may contain various additives such as a coloring matter such as a pigment or dye having near-infrared absorption property, a tackifier, an antioxidant, an anti-aging agent, a moisture absorbent, an ultraviolet absorber, a silane coupling agent, a natural or synthetic resin, and a glass fiber or glass beads if necessary in addition to the above components.

### (Silica fine particles)

It is important for the adhesive layer A to contain silica fine particles having an average particle size of from 4 to 500 nm or less. It is possible to obtain a transparent adhesive sheet of which transparency is maintained and which is excellent in optical reliability but is not whitened even when the adhesive layer is exposed to an environment of a high temperature and high humidity, warm water, boiling or the like when silica fine particles having an average particle size of from 4 to 500 nm or less are contained.

The average particle size of the silica fine particles refers to the average particle size of the primary particles. There is a problem that transparency decreases in accordance with the content of the fine particles when silica particles having the average primary particle size of greater than 500 nm are used. On the other hand, the silica fine particles having the average primary particle size of 4 nm or more has an advantage to be easily available as a commercial product or the like. Meanwhile, the average primary particle size is measured as follows. A dispersion containing uniformly dispersed fine particles is adjusted and irradiated with a laser beam, and the particle size distribution is determined from the intensity distribution pattern of the laser beam diffracted and scattered by the dispersed particles.

### (Content of silica fine particles)

As the content of the silica fine particles, it is preferable to contain the silica fine particles at 3.0% by mass or less with respect to the total adhesive composition constituting the adhesive layer. It is possible to impart hydrophilicity and moisture permeability while minimizing the deterioration in processability and to obtain particularly an excellent effect of suppressing hygrothermal whitening when the content is in the range. From this point of view, the content of the silica fine particles is preferably 0.5% by mass or more and 3.0% by mass or less and more preferably 1.0% by mass or more and 2.5% by mass or less.

In addition, it is also possible to set the content of the silica fine particles to 5.0% by mass or more in a case in which the present adhesive sheet is used by being laminated between the surface protective panel and the touch panel.

It is possible to impart structural viscosity to the adhesive when the content is set to the above value. In other words, the adhesive layer is in an aggregate state like pseudo-crosslinking by the intermolecular interaction such as hydrogen bonding occurring between the silica fine particles in the adhesive composition.

In this state, the adhesive layer is not fluid although there is no crosslink by a chemical bond or there is significantly few crosslinks and thus can retain the shape to some extent. The viscosity decreases depending on the shear velocity when a certain degree or more of stress is applied to this aggregate structure so that the aggregate structure between the fine particles is once destroyed, and thus it is possible to plastically deform the adhesive layer.

It is possible to bond the adhesive layer having the properties described above without residual stress strain as compared with the adhesive layer of the related art in which the shape is retained by the crosslink through a chemical bond, for example, when bonding to an adhesion member having irregularities, and also it is possible to crosslink the adhesive layer after bonding by leaving room to be crosslinked by ultraviolet light or heat after bonding so as to firmly retain the shape and to obtain the reliability after bonding as well. From this point of view, the content of the silica fine particles can also be 5.0% by mass or more.

Examples of the silica fine particles may include dry silica synthesized by a combustion method, an arc method, or the like and wet silica synthesized by a sedimentation method or a gel method. Such silica fine particles are also available as a commercial product, for example, "AEROSIL (trade name, manufactured by NIPPON AEROSIL CO., LTD.)" and "REOLOSIL (trade name, manufactured by Tokuyama Corporation)".

### (Physical properties of adhesive layer A)

It is preferable that the adhesive layer A satisfy the following physical property (1).
(1) The 180° peel force is 5.0 N/cm or more when one surface of the double-sided adhesive sheet is superimposed on soda lime glass, a roller of 1 kg is reciprocated one time to crimp the two, the crimped resultant is allowed to stand for 24 hours in an environment of a temperature of 23°C and a relative humidity of 40% RH, and then the double-sided adhesive sheet is peeled off from the soda lime glass at a temperature of 23°C and a peel rate of 60 mm/min.

To equip the physical property (1) indicates that the adhesive layer A can maintain sufficient adhesive force to an adherend in a normal state.

### <Configuration>

The present adhesive sheet may be an adhesive sheet of a single layer composed of the adhesive layer A or an adhesive sheet of a multilayer structure having the adhesive layer A and another adhesive layer B.

In the case of the adhesive sheet of the multilayer structure having the adhesive layer A and another adhesive layer B, the adhesive sheet may be having another layer or a mold release sheet on one side or both sides.

The adhesive layer B may be any adhesive layer in the B-stage state formed by curing (crosslinking) an adhesive composition consisting of an arbitrary composition.

The composition and physical properties of the adhesive layer B may be the same as or different from those of the adhesive layer A.

### (Production method)

With regard to the present adhesive sheet, it is possible to obtain the adhesive layer A and further a sheet to form the adhesive layer B, for example, by selecting an acrylate copolymer as a base polymer, adding a crosslinking agent and a reaction initiator or a reaction catalyst or the like and mixing by stirring, forming a film on a mold release film so as to have an intended thickness, and crosslinking directly or via the mold release film by heated-air drying or ultraviolet irradiation. At this time, it is possible to obtain the preferred adhesive layer A in the B-stage state when the irradiation dose is adjusted depending on the amounts of the monomer and the photoinitiator upon irradiating with ultraviolet light.

### <Applications>

In an image display device having two facing components for image display device, it is possible to form an image display device by filling the present adhesive sheet between the two components for image display device.

Examples of the component for image display device may include a laminate composed of a combination of any one or two or more kinds selected from the group consisting of a touch panel, an image display panel, a surface protective panel and a polarizing film.

### (Explanation of phrases and the like)

Generally the "sheet" refers to a thin flat product having a relatively small thickness compared to the length and width according to the definition by JIS, and generally the "film" refers to a thin flat product which has an extremely small thickness compared to the length and width and of which the maximum thickness is arbitrarily limited, and is typically provided in the form of a roll (Japanese Industrial Standards JISK6900). However, the boundary between the sheet and the film is not clear and it is not required to distinguish the two in words in the invention, and thus it is intended to include the "sheet" even when referred to as the "film" and to include the "film" even when referred to as the "sheet" in the invention.

In addition, in the case of expressing as the "panel" such as an image display panel and a protective panel, it is intended to include a plate body, a sheet and a film.

In the present specification, in a case in which "X to Y" (X and Y are arbitrary numbers) is described, it is intended to include also the meaning of "preferably greater than X" or "preferably smaller than Y" along with the meaning of "X or greater and Y or smaller" unless otherwise stated.

In addition, in a case in which "X or greater" (X is an arbitrary number) is described, it is intended to include the meaning of "preferably greater than X" unless otherwise stated, and in a case in which "Y or smaller" (Y is an arbitrary number) is described, it is intended to include the meaning of "preferably smaller than Y" unless otherwise stated.

### EXAMPLES

Next, the invention will be described more specifically with reference to Examples.

### <Example 1>

An adhesive composition was prepared by mixing 30 g of silica fine particles (manufactured by NIPPON AEROSIL CO., LTD., trade name "AEROSIL 200V") having an average particle size of 12 nm and 30 g of 4-methylbenzophenone with respect to 1 kg of the base polymer (Tg defined by the tan δ peak temperature of dynamic viscoelasticity of -21°C and mass average molecular weight of 400,000) obtained by the random copolymerization of 70 parts by mass of butyl acrylate and 30 parts by mass of vinyl acetate (Tg determined by the DSC method of 31°C).

The adhesive composition was coated on a mold release PET (trade name "DIAFOIL MRA 100") using an applicator so as to have a thickness of 150 µm and then another mold release PET (trade name "DIAFOIL MRF 75") was covered on the surface coated with the adhesive composition.

The adhesive sheet 1 was fabricated by irradiating both surfaces sandwiching the mold release PET with ultraviolet light of 365 nm using a high-pressure mercury lamp so as to have the integrated light amount of 1000 mJ/cm².

### <Example 2>

The adhesive sheet 2 was fabricated in the same manner as in Example 1 except that the base polymer was changed to the acrylate copolymer (Tg defined by the tan δ peak temperature of dynamic viscoelasticity of -30°C and mass average molecular weight of 350,000) obtained by the random copolymerization of 80 parts by mass of 2-ethylhexyl acrylate and 20 parts mass of 2-hydroxylpropyl acrylate and the addition amount of silica fine particles was changed to 10 g.

### <Example 3>

The adhesive sheet 3 was fabricated in the same manner as in Example 1 except that the base polymer was changed to the acrylate copolymer (Tg defined by the tan δ peak temperature of dynamic viscoelasticity of -14°C and mass average molecular weight of 420,000) obtained by the random copolymerization of 69 parts by mass of butyl acrylate, 30 parts mass of vinyl acetate (Tg determined by the DSC method of 31°C), and 1 part by mass of acrylic acid and the addition amount of silica fine particles (manufactured by NIPPON AEROSIL CO., LTD., trade name "AEROSIL 200V") having an average particle size of 12 nm was changed to 50 g.

### <Example 4>

The adhesive composition was prepared by adding 100 g of silica fine particles (manufactured by NIPPON AEROSIL CO., LTD., trade name "OX 50") having an average particle size of 40 nm and 30 g of 4-methylbenzophenone to the base polymer used in Example 1. The adhesive composition was sandwiched between two pieces of mold release PETs (trade name "DIAFOIL MRA100" and trade name "DIAFOIL MRF 75") and press formed so as to have a thickness of 150 µm, and then the adhesive sheet 4 was fabricated by irradiating both surfaces sandwiching the mold release PET with ultraviolet light of 365 nm using a high-pressure mercury lamp so as to have the integrated light amount of 250 mJ/cm².

Meanwhile, the adhesive sheets 1 to 4 fabricated above still have reactivity to ultraviolet light and thus in the state curable by ultraviolet light (primarily cured state).

### <Comparative Example 1>

The adhesive sheet 5 was fabricated in the same manner as in Example 1 except that silica fine particles were not added.

### <Comparative Example 2>

The adhesive sheet 6 was fabricated in the same manner as in Example 1 except that the base polymer was changed to the acrylate copolymer (Tg defined by the tan δ peak temperature of dynamic viscoelasticity of -14°C and mass average molecular weight of 440,000) obtained by the random copolymerization of 75 parts by mass of 2-ethylhexyl acrylate, 20 parts mass of vinyl acetate, and 4 parts by mass of acrylic acid.

### <Comparative Example 3>

The acrylate copolymer (Tg defined by the tan δ peak temperature of dynamic viscoelasticity of -16°C and mass average molecular weight of 300,000) obtained by the random copolymerization of 90 parts by mass of methoxyethyl acrylate, 3 parts by mass of butyl acrylate, 5 parts by mass of hydroxyethyl acrylate, and 2 parts by mass of acrylamide was used as the base polymer, and 0.4 part by mass of tolylene diisocyanate as the crosslinking agent was added to this and the mixture was matured for 7 days at a temperature of 23°C and a humidity of 65% RH so as to conduct the crosslinking reaction, thereby fabricating the adhesive sheet 7.

### <Evaluation>

### (Optical reliability)

The mold release PETs on the front and back of the double-sided adhesive sheets fabricated in Examples and Comparative Examples were sequentially peeled off, and the double-sided adhesive sheet was then stuck to be sandwiched between the 0.5 mm thick soda lime glass and the cyclo olefin polymer film (manufacture by ZEON CORPORATION, trade name "ZEONOR Film", thickness of 100 µm), thereby fabricating the sample for optical properties evaluation. The haze of the double-sided adhesive sheet was measured using the haze meter NDH5000 (manufacture by NIPPON DENSHOKU INDUSTRIES CO., LTD.).

In addition, the sample for optical properties evaluation thus fabricated was stored for 500 hours under the hygrothermal condition of a temperature of 65°C and a humidity of 90% RH, and then the same measurement was performed for the double-sided adhesive sheet in 2 hours after taken out. At this time, it was judged to be "×" when the haze of the double-sided adhesive sheet was more than 2% and to be "○" when it was 2% or less.

### (Antifoaming reliability)

A laminate having the same configuration as the sample for optical properties evaluation was fabricated for the double-sided adhesive sheet fabricated in Examples and Comparative Examples. Examples 1 to 4 were subjected to the post-crosslinking treatment by irradiating with ultraviolet light from the ZEONOR film side of the laminate such that the integrated light amount by a wavelength of 365 nm was 2000 mJ/cm².

In addition, the laminate separately fabricated using the double-sided adhesive sheet fabricated in Example 3 was not subjected to the post-crosslinking treatment but was left to be in the B-stage state as it was, which was used as Comparative Example 4.

The samples thus fabricated were introduced into an oven at 95°C and taken out therefrom after 6 hours, and the appearance thereof was visually observed. It was judged to be "○" when foaming was not observed and to be "×" when foaming or peeling was observed.

### (Adhesive force)

One of the mold release PETs was peeled off from the double-sided adhesive sheets fabricated in Examples and Comparative Examples and then a polyethylene terephthalate film (manufactured by TOYOBO CO., LTD., trade name "Cosmo Shine A4300", thickness of 100 µm) was roll crimped thereto by a hand roller as a backing film. This was cut into a strip shape of 10 mm width × 100 mm length, the adhesive surface exposed by peeling the remaining mold release PET was roll stuck to the soda lime glass using a hand roller. After 24 hours of maturing in a normal state, the adhesive sheet was peeled off from the glass while pulling the backing film at an angle of 180° and a peel rate of 60 mm/min. The tensile strength was measured by a load cell and the 180° peel strength of the adhesive sheet to the glass was measured. It was judged to be "○" when the peel strength at this time was 5 N/cm or more and to be "×" when it was less than 4N/cm.

### (Corrosion resistance reliability)

An ITO pattern (length of about 97 cm) was formed on a glass substrate (60 mm × 45 mm) by forming reciprocating lines of ITO so as to reciprocate 10.5 times at a line width of 70 µm, a line length of 46 mm, and a line interval of 30 µm, and forming a 2 mm² square composed of ITO at both ends of the reciprocating lines, thereby fabricating the ITO glass substrate for corrosion resistance reliability evaluation (see Fig. 1(A)).

One of the mold release PETs was peeled off from the double-sided adhesive sheets fabricated in Examples and Comparative Examples and then a PET film (manufactured by TOYOBO CO., LTD., trade name "Cosmo Shine A4100", thickness of 125 µm) was stuck to the exposed surface thereof by a hand roller. Next, the double-sided adhesive sheet was cut into 40 mm × 45 mm, the remaining mold release PET was peeled off therefrom, and the double-sided adhesive sheet was stuck to the ITO glass substrate for corrosion resistance reliability evaluation by a hand roller so as to cover the 40 mm length on the reciprocating lines of ITO as illustrated in Fig. 1(B), thereby fabricating the sample for corrosion resistance reliability evaluation (see Fig. 1(C)).

The sample thus fabricated was stored for 500 hours at a temperature of 65°C and under a humidity of 90% and the change in resistance value between the line ends was pursued for every 100 hours. It was judged to be "×" when the change in resistance value was 5% or more in 500 hours and to be "○" when it was less than 5%.

The results of the evaluations described above are presented in the following Table 1.

**[Table 1]**

| Evaluation items | Examp le 1 | Examp le 2 | Examp le 3 | Examp le 4 | Compara tive Example 1 | Compara tive Example 2 | Compara tive Example 3 | Compar ative Example 4 |
|---|---|---|---|---|---|---|---|---|
| Optical reliability | ○ | ○ | ○ | ○ | × | ○ | ○ | ○ |
| | 0.6% | 0.8% | 0.4% | 0.4% | 10% | 0.4% | 0.8% | 0.4% |
| Antifoaming reliability | ○ | ○ | ○ | ○ | ○ | ○ | × | × |
| Adhesive force | 6 N/cm | 5 N/cm | 8 N/cm | 5 N/cm | 7 N/cm | 11 N/cm | 3 N/cm | 8 N/cm |
| | ○ | ○ | ○ | ○ | ○ | ○ | × | ○ |
| Corrosion resistance reliability | 2% | 4% | 4% | 3% | 2% | 8% | 2% | 4% |
| | ○ | ○ | ○ | ○ | ○ | × | ○ | ○ |

### <Discussion>

The double-sided adhesive sheets of Examples 1 to 4 were excellent in optical reliability and antifoaming reliability since the predetermined silica fine particles increased the affinity of the double-sided adhesive sheet for water at the time of moisture absorption and cohesive force after bonding was enhanced by the post-crosslinking treatment.

In addition, excellent result was also obtained in the corrosion resistance reliability by suppressing the carboxyl group-containing monomer to be 2 parts by mass or less.

On the other hand, in Comparative Example 1, the double-sided adhesive sheet was inferior in optical properties since it was hydrophobic and thus water vapor which was supersaturated after moisture absorption condensed and clouded in the double-sided adhesive sheet.

In Comparative Example 2, the double-sided adhesive sheet was resulted in inferior corrosion resistance reliability although high adhesive force was obtained because of a high content of acrylic acid of a component constituting the double-sided adhesive sheet.

In Comparative Example 3, a carboxyl group-containing monomer was not used but a base polymer containing a hydrophilic monomer as a main component was used, and thus it was resulted in that resistance to hygrothermal whitening and resistance to ITO corrosion were excellent but adhesive force and antifoaming reliability were inferior since the cohesive force of the main component was not obtained.

In Comparative Example 4, the laminate using the double-sided adhesive sheet of Example 3 was not subjected to the post-crosslinking but to the heat treatment in the B-stage state as it was, and thus it was resulted in that sufficient cohesive force was not obtained and little foaming was observed at the laminate interface.

## Claims

1. A transparent double-sided adhesive sheet comprising an adhesive layer containing a (meth)acrylate ester copolymer containing a carboxyl group-containing monomer as a copolymerization component at less than 2% by mass and silica fine particles having an average particle size of from 4 to 500 nm or less, wherein
the adhesive layer is curable by heat or ultraviolet light.

2. The transparent double-sided adhesive sheet according to claim 1, wherein the adhesive layer further contains a cleavage type photoinitiator and/or a hydrogen abstraction type photoinitiator as a photoinitiator.

3. The transparent double-sided adhesive sheet according to claim 1 or 2, wherein the adhesive layer contains a (meth)acrylate ester monomer at from 0.05 to 30 parts by mass and an intermolecular hydrogen abstraction type photoinitiator at from 0.1 to 10 parts by mass with respect to 100 parts by mass of the (meth)acrylate ester copolymer, respectively.

4. The transparent double-sided adhesive sheet according to any one of claims 1 to 3, wherein the (meth)acrylate ester copolymer contains a monomer component having a glass transition temperature (Tg) defined by the tan δ peak temperature of dynamic viscoelasticity of -30°C or higher and 10°C or lower and a glass transition temperature (Tg) as a homopolymer determined by the differential scanning calorimetry (DSC) method of 20°C or higher as a copolymerization component.

5. The transparent double-sided adhesive sheet according to any one of claims 1 to 4, wherein the adhesive layer contains silica fine particles having an average particle size of from 4 to 500 nm or less at 3.0% by mass or less.

6. The transparent double-sided adhesive sheet according to any one of claims 1 to 4, wherein the adhesive layer contains silica fine particles having an average particle size of from 4 to 500 nm or less at 5.0% by mass or more.

7. An image display device comprising two facing components for image display device and a configuration in which the transparent double-sided adhesive sheet according to any one of claims 1 to 6 is filled between the two components for image display device.

8. The image display device according to claim 7, wherein the component for image display device is a laminate composed of a combination of any one or two or more kinds selected from the group consisting of a touch panel, an image display panel, a surface protective panel and a polarizing film.
